# EUROPEAN PATENT SPECIFICATION

(11) **EP 2 048 071 B1**
(45) Date of publication and mention of the grant of the patent: **28.04.2010**
(21) Application number: 08017829.6
(22) Date of filing: 10.10.2008
(51) Int. Cl.: B62J 99/00, B62K 11/14, B62K 21/12

(54) **Straddle-type vehicle**
Grätschsitz-Fahrzeug
Véhicule du type monté à califourchon

(30) Priority: 10.10.2007 JP 2007264948
(43) Date of publication of application: 15.04.2009
(73) Proprietor: Yamaha Hatsudoki Kabushiki Kaisha, Iwata-shi, Shizuoka-ken 438-8501 (JP)
(72) Inventor: Hasegawa, Michiharu, Iwata-shi Shizuoka-ken 438-8501 (JP); Watanabe, Takashi, Iwata-shi Shizuoka-ken 438-8501 (JP)
(74) Representative: Grünecker, Kinkeldey, Stockmair & Schwanhäusser Anwaltssozietät

(56) References cited:
- JP-A- 2000 128 052
- JP-A- 2001 114 170
- JP-A- 2002 362 460
- US-A1- 2006 072 331

## Description

The present invention relates to a straddle-type vehicle according to the preamble part of claim 1. In particular, the present invention relates to a straddle-type vehicle comprising a display portion representative of a vehicular state and a display operating portion, by which a display on the display portion is switched.

For example, some motorcycles comprises a display representative of various vehicular states such as travel distance, fuel reserves, cooling water temperature, hydraulic pressure, etc.

As such display, for example, JP-A-2006-103361 proposes one, in which a display portion comprising a liquid crystal display and a display operating portion, by which a display on the display portion is switched manually, are united and arranged on a fuel tank forwardly of a seat.

By the way, with the conventional display, the display portion and the display operating portion are arranged concentratedly, so that the operating portion can only be formed small to some extent and an operator wears relatively thick gloves or the like, thus causing a problem that in operation of the display operating portion, the display portion is sometimes hidden by an operator's gloves or the like to cause a decrease in operability and visibility. The invention has been thought of in view of the conventional situation.

In JP 2000-128052, a meter Is arranged In moving direction of the motorcycle rearwardly of a steering handle on the fuel tank of the motorcycle. A main switch is arranged between the handle crown and said meter.

In JP 2002-362460, a display portion as well as a select and a reset button are arranged in moving direction of the motorcycle in front of the handlebar, while another display portion is arranged on top of a bridge connecting the fork shafts of the motorcycle.

In JP 2001-114170, a meter device is mounted on the fuel tank, while manual operation buttons are located in moving direction of the motorcycle rearwardly of a display portion of the meter device.

It is an objective of the present invention to provide a straddle-type vehicle capable of improving a display in operability and visibility.

According to the present invention, said objective is solved by a straddle-type vehicle having the combination of features of independent claim 1.

With such a straddle-type vehicle, since the operating portion is arranged rearwardly of the steering handle and the display operating portion is arranged between the steering handle and the display portion, there is generated a spatial margin, so that it is easy to set the display operating portion to a relatively large shape, or a shape being hard to interfere with another thing, thus enabling achieving an improvement in operability. Also, the display portion will be positioned below a driver and not hidden by gloves or the like in a state, in which the driver reaches and operates the display operating portion, so that it is possible to correspondingly achieve an improvement in visibility.

Further, preferably the display operating portion is arranged substantially centrally of the steering handle in vehicle width direction.

According to a preferred embodiment, a frame cover is arranged to cover at least a portion of a body frame of the straddle-type vehicle in vehicle moving direction rearwardly of the steering handle from above, and, preferably, the display portion is arranged substantially centrally of the frame cover in vehicle width direction.

Further, preferably at least two of the main switch, the display portion, and the display operating portion are arranged on a centerline of the straddle-type vehicle.

Still further, preferably the display portion comprises a pent roof member extending in vehicle moving direction substantially rearward and obliquely upward.

Yet further still, preferably a front end of the pent roof member overlaps at least a portion of the main switch.

Further, preferably the pent roof member comprises a key insertion recess through which a rider of the straddle-type vehicle can see the main switch.

According to another preferred embodiment, a handle crown connects a pair of left and right fork bodies, and, preferably, a handle holder is mounted to the handle crown to hold the steering handle, and, preferably, the display operating portion is mounted to the handle holder.

Preferably, the handle holder includes a lower holder mounted to the handle crown and an upper holder mounted detachably to the lower holder, and, preferably, the display operating portion is mounted detachably to the lower holder and/or the upper holder.

Further, preferably a mount of the display operating portion, which is mounted to the lower holder, is positioned below the upper holder.

Still further, preferably the display operating portion includes at least one operational switch, and, preferably, the operational switch is positioned above a mating surface of the lower holder and the upper holder.

In the following, the present invention is explained in greater detail by means of embodiments thereof in conjunction with the accompanying drawings, wherein:
- Fig. 1: is a side view showing a motorcycle (straddle-type vehicle) according to an embodiment;
- Fig. 2: is a side view showing a display arranged on the motorcycle;
- Fig. 3: is a side view showing a display portion of the display;
- Fig. 4: is a plan view showing the display portion;
- Fig. 5: is a cross sectional view (cross sectional view taken along the line V-V in Fig. 4) showing the display portion;
- Fig. 6: is a cross sectional, front view (cross sectional view taken along the line VI-VI in Fig. 4) showing a mount of the display portion;
- Fig. 7: is a view showing a main switch of the motorcycle;
- Fig. 8: is a cross sectional view (cross sectional view taken along the line VIII-VIII in Fig. 4) showing a switch cover of the main switch;
- Fig. 9: is a cross sectional view (cross sectional view taken along the line IX-IX in Fig. 3) showing the joint relationship between the switch cover and a frame cover;
- Fig. 10: is a cross sectional view (cross sectional view taken along the line X-X in Fig. 3) showing the joint relationship between the switch cover and a bracket;
- Fig. 11: is a cross sectional view (cross sectional view taken along the line XI-XI in Fig. 4) showing a state, in which a switch bracket of the main switch is joined to a body frame;
- Fig. 12: is a cross sectional view (cross sectional view taken along the line XII-XII in Fig. 4) showing a state, in which a switch bracket of the main switch is joined to the switch cover;
- Fig. 13: is a perspective view showing a display operating portion of the display as seen from a driver;
- Fig. 14: is a perspective view showing the display operating portion;
- Fig. 15: is a cross sectional view (cross sectional view taken along the line XV-XV in Fig. 13) showing a hand holder, on which the display operating portion is arranged; and
- Fig. 16: is a cross sectional view (cross sectional view taken along the line XVI-XVI in Fig. 13) showing the hand holder.

Among others, the following reference signs are used in the figures:
- 1:: motorcycle (straddle-type vehicle)
- 3:: front fork
- 3a:: fork body
- 7:: steering handle
- 7a:: central portion in vehicle width direction
- 30:: main switch
- 35:: display portion
- 36:: display operating portion
- 36b:: operational switch
- 36c:: mount
- 41:: pent roof member
- 56:: handle crown
- 57:: handle holder
- 57a:: mating surface
- 60:: lower holder
- 62:: upper holder

An embodiment will be described below with reference to the accompanying drawings.

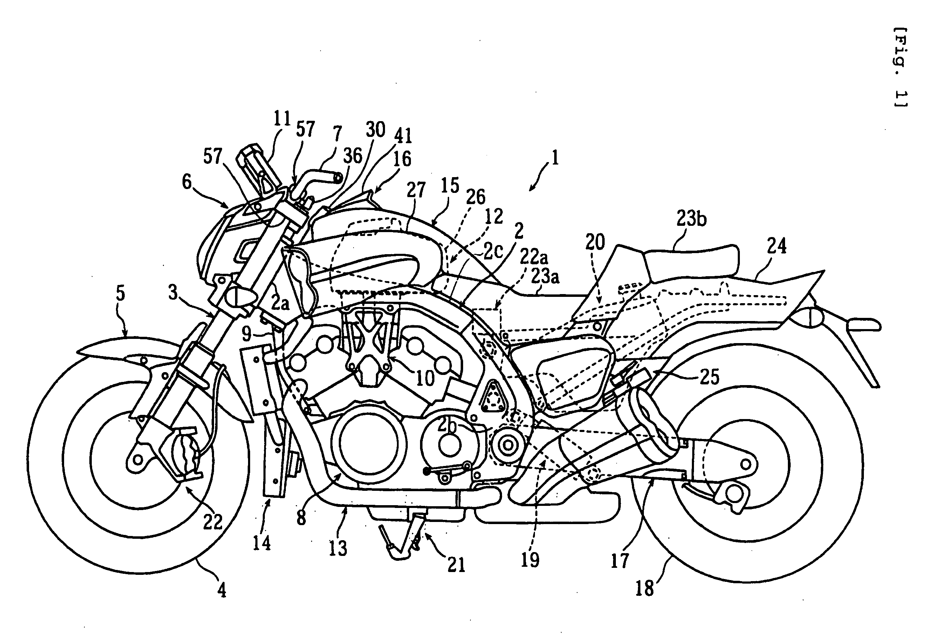

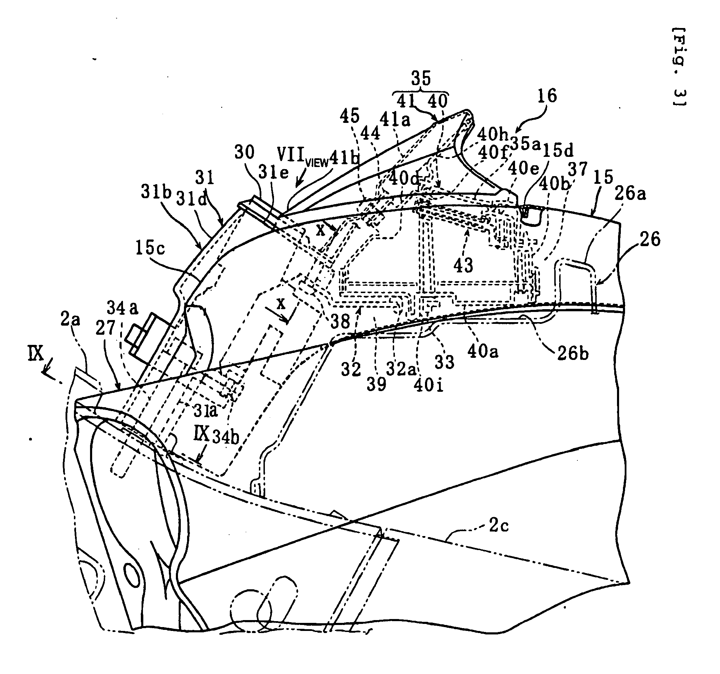

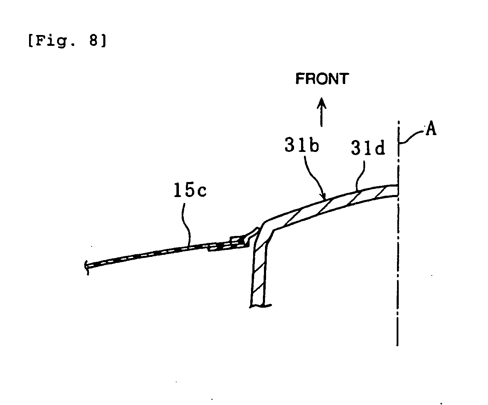

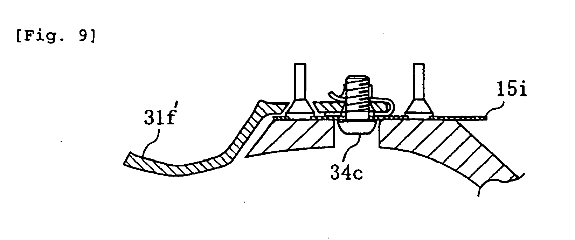

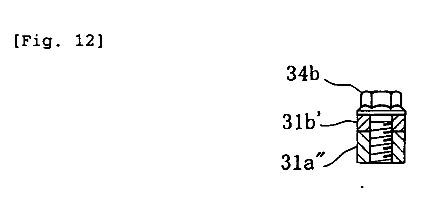

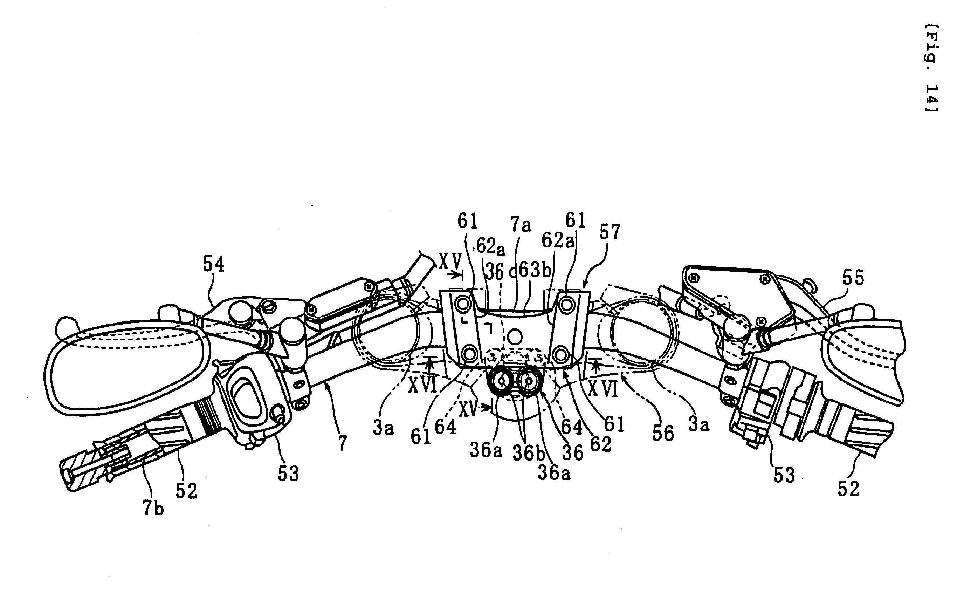

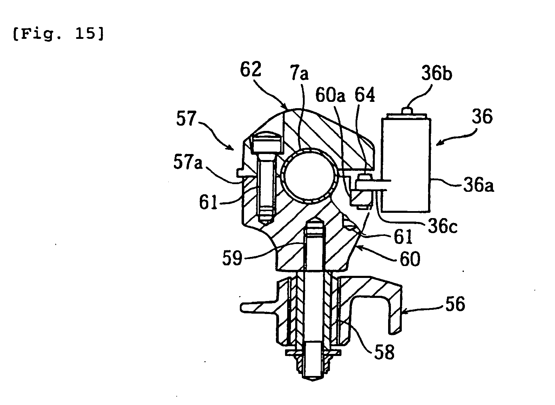

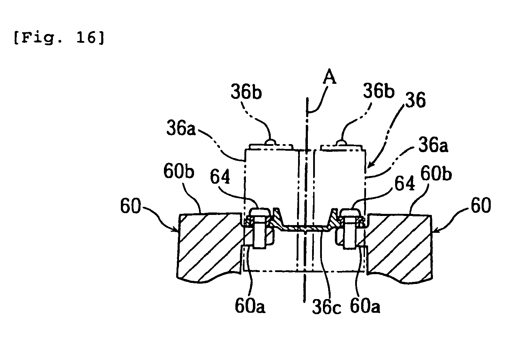

Figs. 1 to 16 are views illustrating a straddle-type vehicle, such as a motorcycle, according to an embodiment. In general, a straddle-type vehicle comprises a body frame and a seat on which a rider can be seated straddling the body frame when being seated. In addition, front and rear, and left and right referred to in descriptions of the embodiment mean front and rear, and left and right as seen in a state of being seated on a seat unless otherwise specified.

In the drawings, the reference numeral 1 denotes a motorcycle, the motorcycle 1 having the following outline construction. A head pipe 2a positioned at a front end of a body frame 2 supports a front fork 3 to make the same steerable left and right.

A front wheel 4 is journaled at a lower end of the front fork 3, an upper portion of the front wheel 4 being covered by a front fender 5, the front fender 5 being mounted to a lower portion of the front fork 3.

Also, on the front fork 3, a headlight device 6 is arranged on an upper portion thereof and a steering handle 7 is fixed at an upper end thereof. Mounted to the headlight device 6 is a circular-shaped meter 11 having a speedometer, a tachometer, etc. and positioned forwardly of the steering handle 7.

Also, an engine unit 8 is suspended from and supported on the body frame 2 by a front suspension bracket 9, a central suspension bracket 10, and left and right, rear arm bracket portions 2b, 2b of the body frame 2. An intake device 12 and an exhaust device 13 are connected to the engine unit 8 and a radiator device 14 is arranged forwardly of the engine unit 8.

The intake device 12 is covered from above by a frame cover 15 arranged on a front portion of the body frame 2 and a display 16 representative of a vehicular state is arranged on the frame cover 15.

Also, a side stand device 21 is arranged on a left wall lower portion of the engine unit 8 to cause the motorcycle 1 to uprise in a little leftwardly inclined state.

Furthermore, a rear arm 17 is supported by the left and right, rear arm bracket portions 2b to be able to swing vertically and a rear wheel 18 is journaled by a rear end of the rear arm 17. The rear wheel 18 and the front wheel 4 are braked by a hydraulic type braking device 22.

A rear-wheel suspension device 19 is arranged between the rear arm 17 and the arm bracket portions 2b, the rear-wheel suspension device 19 being provided with a remote-type operating characteristic adjustment mechanism 25.

A fuel tank 20 is arranged above the rear-wheel suspension device 19. A hydraulic control unit 22a of the braking device 22 is arranged obliquely forwardly of the fuel tank 20.

A straddle-type main seat 23a is arranged to cover upper portions of the hydraulic control unit 22a and the fuel tank 20 and a rear fender 24 covering the rear wheel 18 from above is arranged below a tandem seat 23b arranged rearwardly of the main seat 23a.

The body frame 2 includes left and right main frame portions 2c extending rearward and obliquely downward from the head pipe 2a while diverging outward in a vehicle width direction and the left and right, rear arm bracket portions 2b are contiguous to the left and right main frame portions 2c to extend downward.

The intake device 12 includes an air cleaner 26 arranged between the left and right main frame portions 2c, and an intake duct 27, through which a travel wind is introduced into the air cleaner 26, the intake duct 27 being arranged along outer side surfaces of the left and right main frame portions 2c.

The frame cover 15 is made of a sheet metal and bulges upward from an upper edge of the intake duct 27 as viewed from laterally of a vehicle. Also, as viewed from above a vehicle, the frame cover 15 is arranged to cover the left and right main frame portions 2c, 2c and the air cleaner 26 from above.

A rear wall portion 15a of the frame cover 15 is mounted to the body frame 2 and a front wall portion 15c is mounted to a switch cover 31 b described later and specifically has the following mount structure.

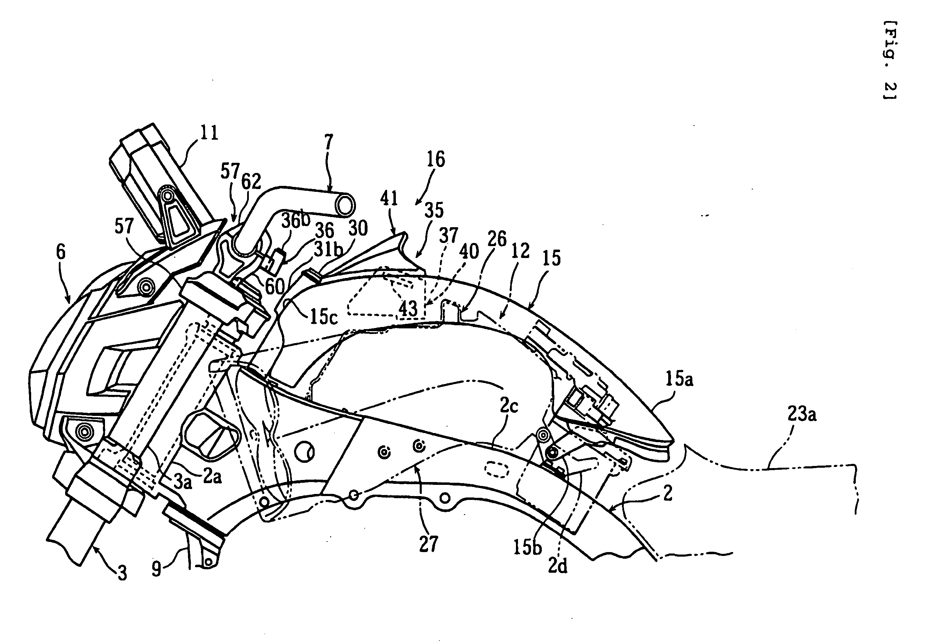

Left and right stays 15b, 15b are formed on left and right edges of the rear wall portion 15a of the frame cover 15 to project downward, the left and right stays 15b, 15b being bolted and fixed to frame brackets 2d, 2d provided on upper surfaces of the left and right main frame portions 2c (see Fig. 2), whereby the frame cover 15 is prescribed to be positioned relative to the body frame 2 in a longitudinal direction and in the vehicle width direction.

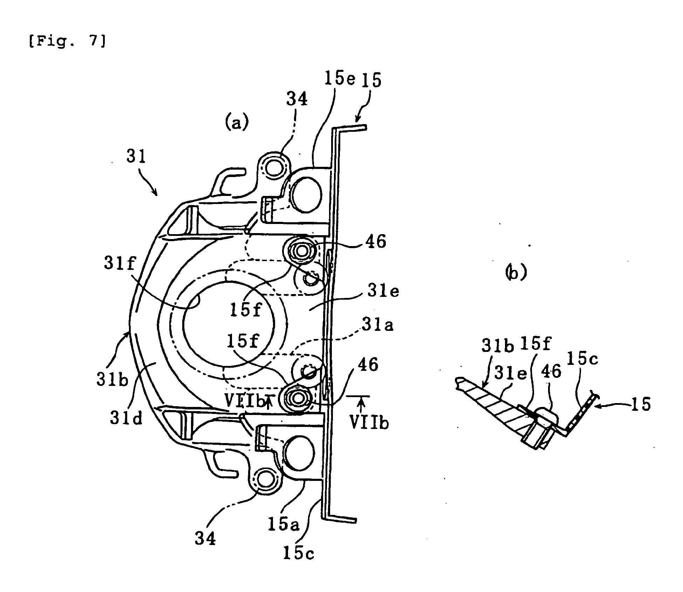

Also, left and right flange portions 15f, 15f are formed on left and right edges of the front wall portion 15c of the frame cover 15 to project forward, the left and right flange portions 15f, 15f being mounted to an upper wall portion 31 e of the switch cover 31 b by fixation bolts 46, 46 (see Fig. 7). Here, a mount of the flange portions 15f and the switch cover 31 b can be regulated in a mount position by a slot.

A main switch 30 is arranged on the front wall portion 15c of the frame cover 15 to enter into the front wall portion 15c and to be positioned in the vicinity of a rear side of the head pipe 2a, as viewed from laterally of a vehicle. In other words, a major part of the main switch 30 is covered by the frame cover 15 as viewed from laterally of a vehicle.

The main switch 30 is mounted to the body frame 2 through a switch bracket 31 a, and front portions and left and right portions of the switch bracket 31 a and the main switch 30 are covered by a switch cover 31 b.

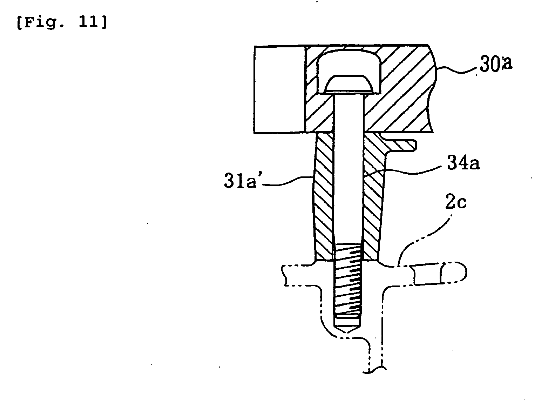

More specifically, left and right mounts 31 a', 31 a' of the switch bracket 31 a and a bottom portion 30a of the main switch 30 are clamped and fixed together to upper surfaces of connections to the head pipe 2a of the body frame 2 by bolts 34a, 34a (see Fig. 11).

Also, left and right flange portions 31 b' of the switch cover 31 b are fixed to left and right flange portions 31 a" of the switch bracket 31 a by bolts 34b.

The switch cover 31 b includes a front wall portion 31 d that covers front portions of the switch bracket 31 a and the main switch 30, and an upper wall portion 31 e extending rearward from an upper edge of the front wall portion 31d, the upper wall portion 31 e being formed with a switch opening 31f that covers an outer peripheral surface of the main switch 30. A front, lower end surface 15i of the frame cover 15 is fixed to left and right, lower ends 31 f of the switch cover 31 b by bolts 34c.

The display 16 includes a display portion 35 representative of various vehicular states such as travel distance, fuel reserves, cooling water temperature, etc., and a display operating portion 36, by which a display on the display portion 35 is switched manually.

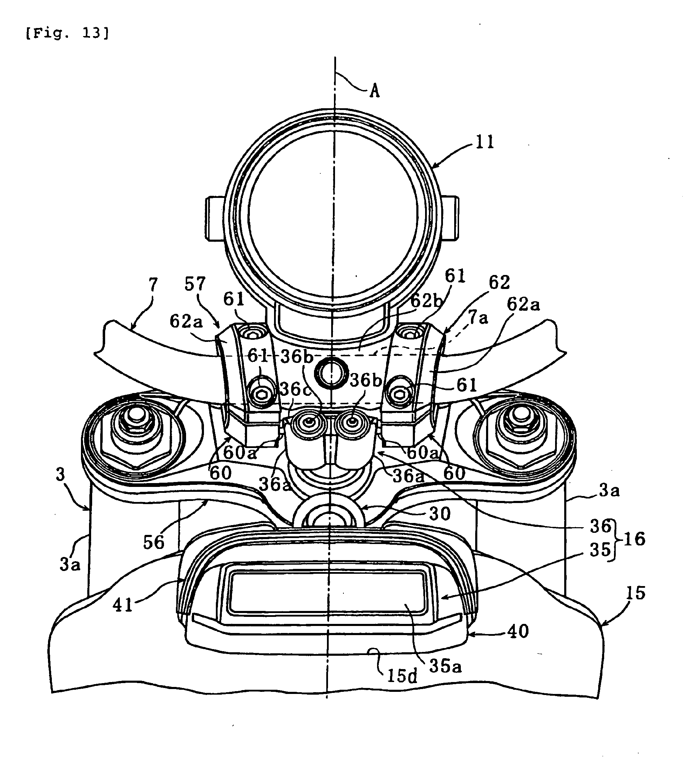

The display portion 35, the display operating portion 36, the main switch 30, and the meter 11 are arranged on a vehicle center line A (see Fig. 13).

The display portion 35 is arranged in a space 37 between the frame cover 15 and the air cleaner 26 arranged below the frame cover 15.

Also, a downwardly dented recess 26b is formed on an upper wall portion 26a of the air cleaner 26 and the display portion 35 is arranged in the recess 26b.

The display portion 35 is arranged in an opening 15d formed centrally of the frame cover 15 in the vehicle width direction so that a display surface 35a of the display portion 35 can be seen from a driver outside.

The display portion 35 includes a display body 40 and a pent roof member 41 mounted to the display body 40 to shield light incident from the front of and above a vehicle.

The display body 40 includes a bottom portion 40a arranged in the frame cover 15 and positioned in the recess 26b of the air cleaner 26 and a substantially box-shaped lid portion 40b mounted watertightly to the bottom portion 40a.

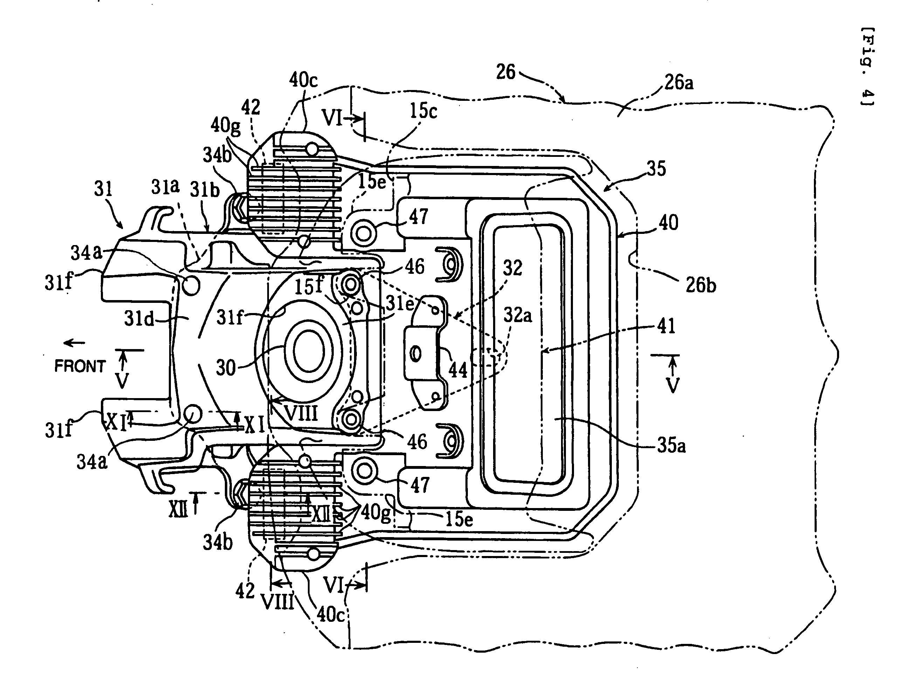

The display body 40 includes left and right extensions 40c, 40c extending toward the front of a vehicle, the left and right extensions 40c extending in a manner to cover left and right sides of the switch cover 31 b. Couplers 42, 42, to which an external harness (not shown) is connected, are arranged in the left and right extensions 40c. A multiplicity of reinforcement ribs 40g, by which the left and right extensions 40c are increased in stiffness, are formed on outer surfaces of the left and right extensions 40c to extend in the extension direction (longitudinal direction) (see Fig. 4).

The lid portion 40b includes a forwardly inclined wall 40d inclined forwardly downward and a rearwardly inclined wall 40e inclined rearwardly downward. A rectangular-shaped display opening 40f is formed on the rearwardly inclined wall 40e, the display opening 40f being covered by a transparent plate, which constitutes the display surface 35a. Also, a plate-shaped shielding portion 40h extending rearward and obliquely upward is formed on a front edge of the display opening 40f.

The display body 40 includes a display plate 43 having an EL (electroluminescence) display 43a that emits light upon application of voltage, and a base plate 43b supporting the display plate 43. The display plate 43 is arranged on the display opening 40f in the lid portion 40b and mounted to the lid portion 40b.

The pent roof member 41 is arranged to cover the display body 40 from above and to cover the opening 15d of the frame cover 15 from the front and above.

The pent roof member 41 projects upward from an upper surface of the frame cover 15 and is inclined rearwardly upward as viewed from laterally of a vehicle, and a front end 41 b of the pent roof member 41 overlaps the main switch 30.

A key insertion recess 41a surrounding a lower edge of the main switch 30 is formed centrally of the pent roof member 41 in the vehicle width direction. Thereby, a driver can see the main switch 30 through the key insertion recess 41 a.

The key insertion recess 41 a of the pent roof member 41 is fixed to the forwardly inclined wall 40d of the display body 40 by a mount bolt 45. More specifically, a substantially hat-shaped mount plate 44 is bolted and fixed to the forwardly inclined wall 40d and the pent roof member 41 is mounted to the mount plate 44. The mount bolt 45 is positioned in the key insertion recess 41 a to become hard to see laterally in the vehicle width direction. In addition, the shielding portion 40h of the display body 40 registers positionally with a moor member 50 bonded to a rear edge portion 41 c of the pent roof member 41.

The display body 40 is mounted to the frame cover 15 and the switch cover 31b and specifically has the following mount structure.

A support plate 32 being substantially triangular-shaped as viewed in plan view is mounted to a rear edge of the upper wall portion 31 e of the switch cover 31 b by means of left and right bolts 38, 38 inserted from under. The support plate 32 is arranged with a clearance 39 between it and the recess 26b of the air cleaner 26 and extends to a position where it overlaps the recess 26b.

A slot 32a being lengthy in a longitudinal direction is formed at a rear end of the support plate 32 and a grommet 33 comprising an elastic member formed along the slot 32a is mounted to the slot 32a.

A downwardly projecting pawl portion 40i is formed on the bottom portion 40a of the display body 40. The pawl portion 40i is inserted into the grommet 33 to be movable in a longitudinal direction and immovable in the vehicle width direction. Also, the pawl portion 40i is formed to be positioned close to a center G of gravity of the display body 40. Also, nuts 47, 47 are insert-molded rearwardly of the reinforcement ribs 40g of the left and right extensions 40c of the display body 40.

Left and right mount flange portions 15e, 15e are formed on a lower edge of the front wall portion 15c of the frame cover 15 to project forward and to be positioned outwardly of the left and right flange portions 15f in the vehicle width direction.

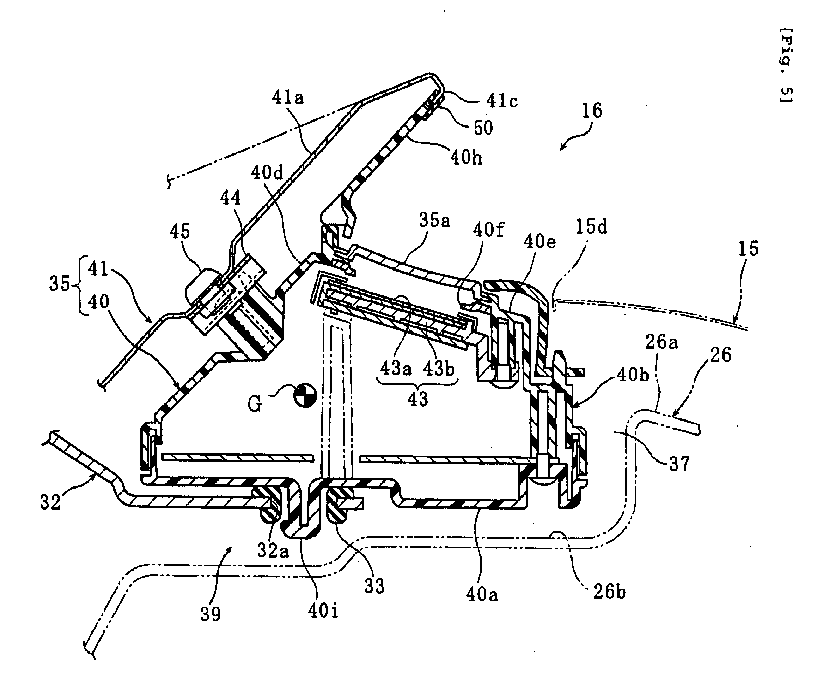

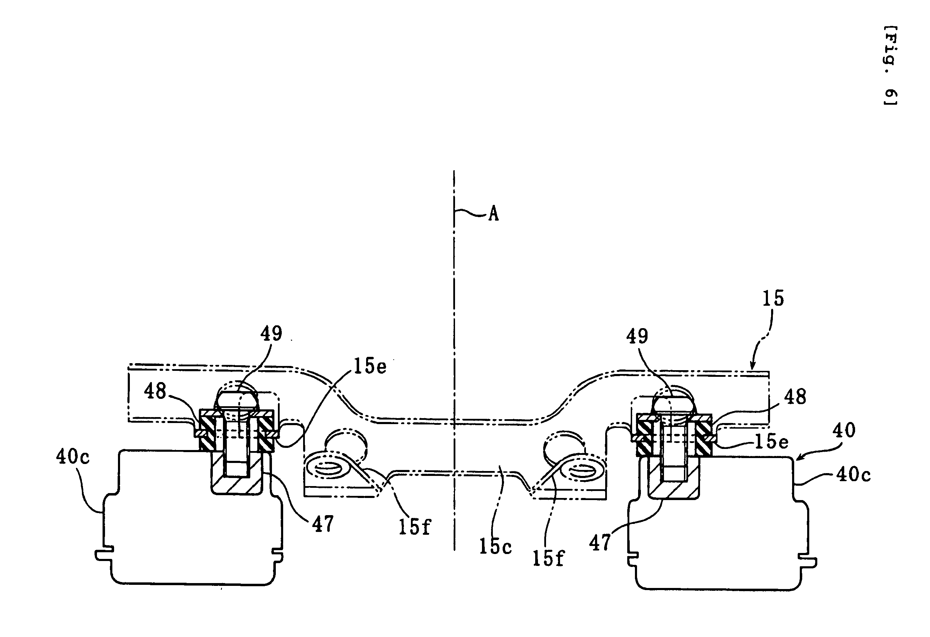

The display body 40 is fixed to the left and right mount flange portions 15e of the frame cover 15 with cover grommets 48, 48 therebetween by bolts 49, 49 in a state, in which the pawl portion 40i is inserted into the grommet 33 of the support plate 32 to be adjustable in a position in the longitudinal direction (see Figs. 5 and 6). Thereby, the display portion 35 has the neighbor of its center G of gravity supported by the support plate 32 with the grommet 33 therebetween and has its left and right, front ends supported by the frame cover 15 with the cover grommets 48 therebetween.

The display operating portion 36 is formed separately from the display portion 35 and arranged between the steering handle 7 and the display portion 35.

The display operating portion 36 is structured such that left and right, cylindrical-shaped operating bodies 36a, 36a are made integral, and operational switches 36b, 36b are arranged on upper surfaces of the left and right operating bodies 36a. When the operational switches 36b are pushed, a display represented on the display body 40 is switched.

The display operating portion 36 is arranged on a central portion 7a of the steering handle 7 in the vehicle width direction and specifically has the following mount structure.

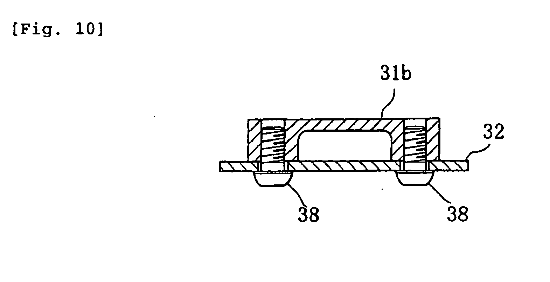

The steering handle 7 is made of a pipe material extending in the vehicle width direction, left and right grips 52, 52 are mounted to left and right ends 7b, 7b of the steering handle 7, and switch boxes 53, 53 are arranged inside the left and right grips 52. Also, a clutch lever 54 and a front brake lever 55, respectively, are arranged forwardly of the left and right grips 52 (see Fig. 10).

Upper ends of left and right fork bodies 3a, 3a of the front fork 3 are joined together by a handle crown 56 and a handle holder 57 is mounted to the handle crown 56. The handle holder 57 holds the central portion 7a of the steering handle 7 in the vehicle width direction.

The handle holder 57 includes a pair of left and right, lower holders 60, 60 mounted to the handle crown 56 and upper holders 62 mounted detachably to the left and right, lower holders 60. The steering handle 7 is interposed by holding holes formed on mating surfaces 57a of the upper holders 62 and the lower holders 60.

The left and right, lower holders 60 are fixed to an upper surface of the handle crown 56 by insertion bolts 59 inserted into the handle crown 56 from under with rubber bushes 58 therebetween.

The upper holders 62 include left and right holder portions 62a, 62a opposed to the left and right, lower holders 60, and connections 62b for connection of the left and right holder portions 62a. The left and right holder portions 62a are fixed to the left and right, lower holders 60, 60 by a pair of front and rear clamping bolts 61, 61.

The display operating portion 36 is mounted detachably to the left and right, lower holders 60. Inwardly projecting projections 60a, 60a are formed on inner walls of the left and right, lower holders 60. The left and right projections 60a are formed stepwise to be positioned below upper surfaces 60b of the lower holders 60.

Forwardly projecting mounts 36c are formed on the left and right operating bodies 36a, 36a of the display operating portion 36. The mounts 36c are fixed to the projections 60a of the left and right, lower holders 60 by left and right mount bolts 64, 64 inserted from above.

Here, the display operating portion 36 is mounted to the lower holders 60 before the steering handle 7 is mounted, and the upper holders 62 are mounted after the display operating portion 36 is mounted.

The mounts 36c are positioned below the connections 62b of the upper holders 62 and so upper portions of the mounts 36c are covered and hidden by the connections 62b and made hard to see from above. Also, left and right sides of the mounts 36c are covered and hidden by the left and right, lower holders 60.

the left and right, operational switches 36b on the display operating portion 36 are positioned above the mating surfaces 57a of the left and right, lower holders 60 and the upper holders 62 and specifically arranged in positions substantially flush with upper surfaces of the upper holders 62.

According to the embodiment, since the display operating portion 36 for manual switching of a display is formed separately from the display portion 35 representative of vehicular states, the display portion 35 is arranged rearwardly of the steering handle 7, and the display operating portion 36 is arranged between the steering handle 7 and the display portion 35, the display portion 35 will be positioned below a driver in a state, in which the driver reaches and operates the display operating portion 36, so that it is possible to perform operation of the display operating portion 36 and confirmation of a display by the display portion 35 without mutual interference, thus enabling achieving an improvement in operability and visibility.

Since the display operating portion 36 is arranged on the central portion 7a of the steering handle 7 in the vehicle width direction, the display operating portion 36 can be arranged by making use of an empty space around a handle, thus enabling further heightening the operability.

According to the embodiment, since the display portion 35 is arranged centrally of the frame cover 15, which covers the body frame 2 from above, in the vehicle width direction, a driver is liable to visibly recognize a display.

Also, since the display portion 35 includes the pent roof member 41 extending rearward and obliquely upward, it is possible to shield light incident from the front of and above a vehicle, thus enabling further heightening the visibility of a display.

According to the embodiment, since the display operating portion 36 is supported by the handle holder 57 being a part of high stiffness mounted to the handle crown 56 being a part of high stiffness, it is possible to ensure support strength and support stiffness, which are required for the display operating portion 36.

Since the display operating portion 36 is mounted detachably to the lower holders 60 of the handle holder 57, it is possible to mount the display operating portion 36 in a location relatively hard to see, thus enabling preventing degradation in outward appearance.

According to the embodiment, since the mounts 36c of the display operating portion 36 are positioned below the upper holders 62 to be covered by the upper holders 62, the mounts 36c are hidden below the upper holders 62, thus enabling preventing degradation in outward appearance.

According to the embodiment, since the operational switches 36b on the display operating portion 36 are positioned above the mating surfaces 57a of the lower holders 60 and the upper holders 62, it is possible to arrange the operational switches 36b in positions for easy operation by a driver, thus enabling the operability correspondingly.

In addition, while the embodiment has been described taking an example of a motorcycle, the present teaching is also applicable to motor tricycles, motor four-wheel cars, straddle-type vehicles for terrain traveling, on which a straddle-type main seat is mounted.

In order to provide a straddle-type vehicle capable of improving a display in operability and visibility, the description above discloses a straddle-type vehicle comprising: a steering handle 7, a display portion 35 configured to represent a vehicular state, and a display operating portion 36, by which a display on the display portion 35 can be switched, said display operating portion 36 being arranged in vehicle moving direction rearwardly of the steering handle 7, and said display operating portion 36 being arranged between the steering handle 7 and the display portion 35, wherein the display operating portion 36 and the display portion 35 are separate from each other, and a main switch 30 is arranged between the display portion 35 and the display operating portion 36.

Preferably, the display operating portion 36 is arranged substantially centrally of the steering handle 7 in vehicle width direction.

Further, preferably a frame cover 15 is arranged to cover at least a portion of a body frame 2 of the straddle-type vehicle In vehicle moving direction rearwardly of the steering handle 7 from above, and the display portion 35 is arranged substantially centrally of the frame cover 15 in vehicle width direction.

Further, preferably at least two of the main switch 30, the display portion 35, and the display operating portion 36 are arranged on a centerline A of the straddle-type vehicle.

Further, preferably the display portion 35 comprises a pent roof member 41 extending in vehicle moving direction substantially rearward and obliquely upward.

Further, preferably a front end 41 b of the pent roof member 41 overlaps at least a portion of the main switch 30.

Further, preferably the pent roof member 41 comprises a key insertion recess 41a through which a rider of the straddle-type vehicle can see the main switch 30.

Further, preferably a handle crown 56 connects a pair of left and right fork bodies 3a, a handle holder 57 is mounted to the handle crown 56 to hold the steering handle 7, and the display operating portion 36 is mounted to the handle holder 57.

Further, preferably the handle holder 57 includes a lower holder 60 mounted to the handle crown 56 and an upper holder 62 mounted detachably to the lower holder 60, and the display operating portion 36 is mounted detachably to the lower holder 60 and/or the upper holder 62.

Further, preferably a mount 36c of the display operating portion 36, which is mounted to the lower holder 60, is positioned below the upper holder 62.

Further, preferably the display operating portion 36 includes at least one operational switch 36b, and the operational switch 36b is positioned above a mating surface of the lower holder 60 and the upper holder 62.

## Claims

1. Straddle-type vehicle comprising:
a steering handle (7),
a display portion (35) configured to represent a vehicular state, and
a display operating portion (36), by which a display on the display portion (35) can be switched, said display operating portion (36) being arranged in vehicle moving direction rearwardly of the steering handle (7), and said display operating portion (36) being arranged between the steering handle (7) and the display portion (35),
**characterized in that** the display operating portion (36) and the display portion (35) are separate from each other, and
a main switch (30) is arranged between the display portion (35) and the display operating portion (36).

2. Straddle-type vehicle according to claim 1, **characterized in that** the display operating portion (36) is arranged substantially centrally of the steering handle (7) in vehicle width direction.

3. Straddle-type vehicle according to claim 1 or 2, **characterized in that** a frame cover (15) is arranged to cover at least a portion of a body frame (2) of the straddle-type vehicle in vehicle moving direction rearwardly of the steering handle (7) from above, and the display portion (35) is arranged substantially centrally of the frame cover (15) in vehicle width direction.

4. Straddle-type vehicle according to one of claims 1 to 3, **characterized in that** at least two of the main switch (30), the display portion (35), and the display operating portion (36) are arranged on a centerline (A) of the straddle-type vehicle.

5. Straddle-type vehicle according to one of claims 1 to 4, **characterized in that** the display portion (35) comprises a pent roof member (41) extending in vehicle moving direction substantially rearward and obliquely upward.

6. Straddle-type vehicle according to claim 5, **characterized in that** a front end (41 b) of the pent roof member (41) overlaps at least a portion of the main switch (30).

7. Straddle-type vehicle according to claim 5 or 6, **characterized in that** the pent roof member (41) comprises a key insertion recess (41 a) through which a rider of the straddle-type vehicle can see the main switch (30).

8. Straddle-type vehicle according to one of claims 1 to 7, **characterized in that** a handle crown (56) connects a pair of left and right fork bodies (3a), a handle holder (57) is mounted to the handle crown (56) to hold the steering handle (7), and the display operating portion (36) is mounted to the handle holder (57).

9. Straddle-type vehicle according to claim 8, **characterized in that** the handle holder (57) includes a lower holder (60) mounted to the handle crown (56) and an upper holder (62) mounted detachably to the lower holder (60), and the display operating portion (36) is mounted detachably to the lower holder (60) and/or the upper holder (62).

10. Straddle-type vehicle according to claim 9, **characterized in that** a mount (36c) of the display operating potion (36), which is mounted to the lower holder (60), is positioned below the upper holder (62).

11. Straddle-type vehicle according to claim 9 or 10, **characterized in that** the display operating portion (36) includes at least one operational switch (36b), and the operational switch (36b) is positioned above a mating surface of the lower holder (60) and the upper holder (62).

## Patentansprüche

1. Fahrzeug vom Spreizsitz- Typ, aufweisend:
einen Lenkhandgriff (7),
einen Anzeigeabschnitt (35), konfiguriert einen Fahrzeugzustand anzuzeigen, und
einen Anzeigebetätigungsabschnitt (36), durch den eine Anzeige auf dem Anzeigeabschnitt (35) geschaltet werden kann, wobei der Anzeigebetätigungsabschnitt (36) in Richtung der Fahrzeugbewegung hinter dem Lenkhandgriff (7) angeordnet ist und der Anzeigebetätigungsabschnitt (36) zwischen dem Lenkhandgriff (7) und dem Anzeigeabschnitt (35) angeordnet ist,
**dadurch gekennzeichnet, dass** der Anzeigebetätigungsabschnitt (36) und der Anzeigeabschnitt (35) voneinander getrennt sind, und
ein Hauptschalter zwischen dem Anzeigeabschnitt (35) und dem Anzeigebetätigungsabschnitt (36) angeordnet ist.

2. Fahrzeug vom Spreizsitz- Typ nach Anspruch 1, **dadurch gekennzeichnet, dass** der Anzeigebetätigungsabschnitt (36) im Wesentlichen mittig des Lenkhandgriffes (7) in Richtung der Fahrzeugbreite angeordnet ist.

3. Fahrzeug vom Spreizsitz- Typ nach Anspruch 1 oder 2, **dadurch gekennzeichnet, dass** eine Rahmenabdeckung (15) angeordnet ist, um zumindest einen Abschnitt eines Karosserierahmens (2) des Fahrzeuges vom Spreizsitz- Typ in einer Bewegungsrichtung des Fahrzeuges hinter dem Lenkhandgriff (7) von oben abzudecken und der Anzeigeabschnitt (35) im Wesentlichen in der Mitte der Rahmenabdeckung (15) in Richtung der Breite des Fahrzeuges angeordnet ist.

4. Fahrzeug vom Spreizsitz- Typ nach einem der Ansprüche 1 bis 3, **dadurch gekennzeichnet, dass** zumindest zwei der Hauptschalter (30), der Anzeigeabschnitt (35) und der Anzeigebetätigungsabschnitt (36) auf einer Mittellinie (A) des Fahrzeuges vom Spreizsitz- Typ angeordnet sind.

5. Fahrzeug vom Spreizsitz- Typ nach einem der Ansprüche 1 bis 4, **dadurch gekennzeichnet, dass** der Anzeigeabschnitt (35) ein V- förmig nach innen geneigtes Dach (41) aufweist, das sich in Richtung der Bewegungsrichtung im Wesentlichen nach hinten und schräg nach oben erstreckt.

6. Fahrzeug vom Spreizsitz- Typ nach Anspruch 5, **dadurch gekennzeichnet, dass** ein vorderes Ende (41 b) des V- förmig nach innen geneigtes Dachs (41) zumindest einen Abschnitt des Hauptschalters (30) überlappt.

7. Fahrzeug vom Spreizsitz- Typ nach Anspruch 5 oder 6, **dadurch gekennzeichnet, dass** das V- förmig nach innen geneigtes Dach (41) eine Einsetzaussparung (41 a) für den Schlüssel aufweist, durch den ein Fahrer des Fahrzeuges vom Spreizsitz- Typ den Hauptschalter (30) sehen kann.

8. Fahrzeug vom Spreizsitz- Typ nach einem der Ansprüche 1 bis 7, **dadurch gekennzeichnet, dass** eine Griffdeckplatte (56) ein Paar von linken und rechten Gabelkörpern (3a) verbindet, wobei ein Handgriffhalter (57) an der Griffdeckplatte (56) montiert ist, um den Lenkhandgriff (7) zu halten, und der Anzeigebetätigungsabschnitt (36) an dem Handgriffhalter (57) montiert ist.

9. Fahrzeug vom Spreizsitz- Typ nach Anspruch 8, **dadurch gekennzeichnet, dass** der Handgriffhalter (57) einen unteren Halter (60), montiert an der Griffdeckplatte (56), und einen oberen Halter (62), lösbar an dem unteren Halter (60) montiert, enthält und der Anzeigebetätigungsabschnitt (36) lösbar an dem unteren Halter (60) und / oder dem oberen Halter (62) montiert ist.

10. Fahrzeug vom Spreizsitz- Typ nach Anspruch n9, **dadurch gekennzeichnet, dass** ein Montageabschnitt (36c) des Anzeigebetätigungsabschnittes (36), der an dem unteren Halter (60) montiert ist, unter dem oberen Halter (62) montiert ist.

11. Fahrzeug vom Spreizsitz- Typ nach Anspruch 9 oder 10, **dadurch gekennzeichnet, dass** der Anzeigebetätigungsabschnitt (36) zumindest einen Betriebsschalter (36b) enthält und der Betriebsschalter (36b) oberhalb einer übereinstimmenden Oberfläche des unteren Halters (60) und des oberen Halters (62) positioniert ist.

## Revendications

1. Véhicule de type monté à califourchon comprenant :
un guidon (7) ;
une partie d'affichage (35) configurée pour représenter un état véhiculaire ; et
une partie de fonctionnement d'affichage (36), par laquelle un affichage sur la partie d'affichage (35) peut être commuté, ladite partie de fonctionnement d'affichage (36) étant agencée dans la direction de déplacement de véhicule vers l'arrière du guidon (7), et ladite partie de fonctionnement d'affichage (36) étant agencée entre le guidon (7) et la partie d'affichage (35),
**caractérisé en ce que** la partie de fonctionnement d'affichage (36) et la partie d'affichage (35) sont distinctes l'une de l'autre, et
un commutateur principal (30) est agencé entre la partie d'affichage (35) et la partie de fonctionnement d'affichage (36).

2. Véhicule de type monté à califourchon selon la revendication 1, **caractérisé en ce que** la partie de fonctionnement d'affichage (36) est agencée sensiblement au centre du guidon (7) dans la direction de largeur de véhicule.

3. Véhicule de type monté à califourchon selon la revendication 1 ou 2, **caractérisé en ce qu'**un capot de châssis (15) est agencé pour recouvrir au moins une partie d'un châssis de carrosserie (2) du véhicule de type monté à califourchon dans la direction de déplacement de véhicule du guidon (7) par dessus, et la partie d'affichage (35) est agencée sensiblement au centre du capot de châssis (15) dans la direction de largeur de véhicule.

4. Véhicule de type monté à califourchon selon l'une des revendications 1 à 3, **caractérisé en ce qu'**au moins deux du commutateur principal (30), de la partie d'affichage (35), et de la partie de fonctionnement d'affichage (36) sont agencés sur une ligne médiane (A) du véhicule de type monté à califourchon.

5. Véhicule de type monté à califourchon selon l'une des revendications 1 à 4, **caractérisé en ce que** la partie d'affichage (35) comprend un élément à toit en pente (41) s'étendant dans la direction de déplacement de véhicule sensiblement vers l'arrière et obliquement vers le haut.

6. Véhicule de type monté à califourchon selon la revendication 5, **caractérisé en ce qu'**une extrémité avant (41b) de l'élément à toit en pente (41) chevauche au moins une partie du commutateur principal (30).

7. Véhicule de type monté à califourchon selon la revendication 5 ou 6, **caractérisé en ce que** l'élément à toit en pente (41) comprend un évidement d'insertion de clé (41a) à travers lequel un pilote du véhicule de type monté à califourchon peut voir le commutateur principal (30).

8. Véhicule de type monté à califourchon selon l'une quelconque des revendications 1 à 7, **caractérisé en ce qu'**une couronne de guidon (56) connecte une paire de corps de fourche gauche et droit (3a), un support de guidon (57) est monté sur la couronne de guidon (56) pour maintenir le guidon (7), et la partie de fonctionnement d'affichage (36) est montée sur le support de guidon (57).

9. Véhicule de type monté à califourchon selon la revendication 8, **caractérisé en ce que** le support de guidon (57) comprend un support inférieur (60) monté sur la couronne de guidon (56) et un support supérieur (62) monté de manière amovible sur le support inférieur (60), et la partie de fonctionnement d'affichage (36) est montée de manière amovible sur le support inférieur (60) et/ou le support supérieur (62).

10. Véhicule de type monté à califourchon selon la revendication 9, **caractérisé en ce qu'**un montant (36c) de la partie de fonctionnement d'affichage (36), qui est montée sur le support inférieur (60), est positionné au-dessous du support supérieur (62).

11. Véhicule de type monté à califourchon selon la revendication 9 ou 10, **caractérisé en ce que** la partie de fonctionnement d'affichage (36) comprend au moins un commutateur opérationnel (36b) et le commutateur opérationnel (36b) est positionné au-dessus d'une surface d'accouplement du support inférieur (60) et du support supérieur (62).
